# EUROPÄISCHE PATENTSCHRIFT

(11) **EP 3 539 387 B1**
(45) Veröffentlichungstag und Bekanntmachung des Hinweises auf die Patenterteilung: **12.05.2021**
(21) Anmeldenummer: 18161200.3
(22) Anmeldetag: 12.03.2018
(51) Int. Cl.: A23C 7/04, A23C 19/05, A23C 19/08, A23C 19/09

(54) **VERFAHREN ZUR HERSTELLUNG VON KÄSE**
PROCESS FOR MAKING CHEESE
PROCÉDÉ POUR LA PREPARATION DU FROMAGE

(43) Veröffentlichungstag der Anmeldung: 18.09.2019
(73) Patentinhaber: DMK Deutsches Milchkontor GmbH, 27404 Zeven (DE)
(72) Erfinder: Tiedemann, Deyk, 27432 Nieder Ochtenhausen (DE); van der Velde, Henk, 8506CA Haskerhorne (NL); Mankiewitz, Ralf, 24363 Holtsee (DE)
(74) Vertreter: Fabry, Bernd

(56) Entgegenhaltungen:
- DE-A1- 3 217 310
- DE-A1- 10 348 733
- US-A1- 2003 152 686
- Anonymous: "Tetra Tebel Pasta Filata Efficiency line solution", , 1. Januar 2010 (2010-01-01), Seiten 1-4, XP055388441, Gefunden im Internet: URL:file:///C:/Users/DB52148/AppData/Local /Temp/pd10331en_tetra_tebel_pasta_filata.p df [gefunden am 2017-07-06]
- Tamine A.Y. ET AL: In: "Yoghurt, Science and Technology. 2nd ed.", 1. Januar 1999 (1999-01-01), Woodhead Publishing, XP055263999, Seiten 11-35, * Seite 16, Absatz 3-4 *
- MOSHE ROSENBERG: "Current and future applications for membrane processes in the dairy industry", TRENDS IN FOOD SCIENCE & TECHNOLOGY, Bd. 6, Nr. 1, 1. Januar 1995 (1995-01-01), Seiten 12-19, XP055197852, ISSN: 0924-2244, DOI: 10.1016/S0924-2244(00)88912-8

## Beschreibung

### GEBIET DER ERFINDUNG

Die Erfindung befindet sich auf dem Gebiet der Milch- und Käseprodukte und betrifft ein verbessertes Verfahren zur Herstellung von Schnitt- oder Hartkäse.

### STAND DER TECHNIK

Die Geschichte der Käseherstellung reicht bis in die frühe Jungsteinzeit zurück. Käse stellt damit eines der ältesten vom Menschen künstlich hergestellten Nahrungsmittel dar. Die Herstellung läuft dementsprechend seit Jahrtausenden im Wesentlichen gleich ab: Milch wird durch Zugabe von Milchsäurekulturen und Lab zum Gerinnen gebracht ("Dicklegung") und die dabei freigesetzte flüssige Phase - die Molke - vom gallertartig bis festen Rückstand abgetrennt. Die dickgelegte Flüssigkeit ("Dickerte") entwässert weiter und wird dann mechanisch zerkleinert, wobei man den sogenannten Käsebruch erhält. Dieser wird durch Vorpressen, Formen und verschiedene Reifungsprozesse schließlich zum Endprodukt verarbeitet.

Ein bekanntes Problem bei der Käseerzeugung besteht darin, dass mit der Molke gleichzeitig auch nicht unerhebliche Mengen an feinen Käsebruchpartikeln abgetrennt werden, die einen mittleren Durchmesser von 0,1 - 2 mm aufweisen. Die Rückgewinnung dieses sogenannten "Käsestaubs" mit Hilfe entsprechender Separatoren ist möglich, aber technisch aufwendig. Bevorzugt wäre, die Partikel wieder in den Käsungsprozess zurückzuführen, da es sich grundsätzlich ja um eine wertvolle Proteinquelle handelt. Allerdings zeigt sich, dass die Partikel sich anschließend erneut in der Molke und nicht im Käsebruch wiederfinden. Dies führt dazu, dass der Käsestaub üblicherweise zu Schmelzkäse oder Viehfutter verarbeitet wird. In diesem Zusammenhang sei beispielsweise auf CARAWAN ET AL "Dairy Processing Water and Waste Water Management" in EXTENSION SPECIAL REPORT NO. AM-18b (1979**)** veröffentlich vom The North Carolina Agricultural Extension Service und insbesondere auf Seite 103 hingewiesen.

Aus der deutschen Patentanmeldung DE 103 48 733 A1 (CAMPINA) ist indes ein Verfahren bekannt, dass sich der geschilderten Problematik annimmt und bei dem die mit der Molke abgetrennten feinen Käsebruchpartikel wieder in das Käsungsverfahren zurückgeführt werden. Dabei wird die Molke einer mechanischen Homogenisierung unterworfen und die darin enthaltenden Partikel bis zu eine maximalen Größe von 250 µm zerkleinert, so dass sie sich in der Flüssigkeit nicht mehr absetzen. Die Suspension wird anschließend der Käsemilch - also der standardisierten Milch - zugesetzt. Anschließend wird die so angereicherte Standardmilch pasteurisiert und fermentiert.

Bei der Nacharbeitung des Verfahrens hat die Anmelderin jedoch festgestellt, dass dies nur zu unbefriedigenden Ergebnissen führt. Insbesondere wurde beobachtet, dass sich bei der beschriebenen Vorgehensweise unter anderem die thermophilen Keime und Bakteriophagen trotz Pasteurisierung anreichern und das Produkt - zumal wenn das Verfahren wie üblich kontinuierlich betrieben wird - so stark kontaminieren, dass die regulatorischen Voraussetzungen für Anbieten und Verzehr nicht mehr erfüllt sind.

Die Aufgabe der vorliegenden Erfindung hat daher darin bestanden, das eingangs beschriebene Verfahren in solcher Weise abzuändern, dass eine mikrobiologisch einwandfreie Ware auch kontinuierlich erhalten wird.

### BESCHREIBUNG DER ERFINDUNG

Gegenstand der Erfindung ist ein Verfahren zur Herstellung von Schnitt- oder Hartkäse umfassend oder bestehend aus den folgenden Schritten:
(i) Bereitstellung von Milch;
(ii) Dicklegung der Milch unter Zugabe von Starterkulturen und/oder Labmaterialien;
(iii) Trennung der dickgelegten Milch aus Schritt (ii) in Molke und Käsebruch;
(iv) Verarbeitung der in Schritt (iii) erhaltenen Molke mit darin enthaltenen feinen Käsebruchpartikeln zu einer stabilen Suspension, wobei die Käsebruchpartikel einen Durchmesser von weniger als 250 µm aufweisen; sowie
(v) Weiterverarbeitung des in Schritt (iii) erhaltenen Käsebruchs zum Käse, welches sich dadurch auszeichnet, dass
   (a) das Verfahren vor der Trennung von Molke und Käsebruch einen weiteren Schritt enthält, bei dem die Milch einer Filtration und/oder Baktofugation unter Erhalt eines Keimkonzentrats und einer behandelten Milch unterworfen wird;
   (b) das in Schritt (a) erhaltene Keimkonzentrat sterilisiert und das sterilisierte Keimkonzentrat der behandelten Milch wieder zugesetzt wird; und
   (c) die in Schritt (iv) hergestellte Suspension entweder dem in Schritt (a) erhaltenen Keimkonzentrat zugesetzt wird.

Wie im nachfolgenden experimentellen Teil gezeigt wird, führt die Einführung von Baktofugation und Sterilisierung als zusätzliche Schritte sowie die Eindosierung der Käsepartikelsuspension in das Keimkonzentrat dazu, dass ein praktisch keimarmes und damit mikrobiologisch einwandfreies Produkt erhalten wird.

### Einsatzstoffe, Standardisierung und Pasteurisierung

Geeignete Einsatzstoffe für die Herstellung von Schnitt- oder Hartkäse, umfassen Rohmilch, teilentrahmte Milch und insbesondere Magermilch, wobei der Fettgehalt vorzugsweise im Bereich von etwa 1 bis etwa 5 Gew.-% liegt.

Als Einsatzstoff besonders bevorzugt ist die sogenannte Standardmilch (auch als standardisierte Milch bezeichnet). Hierbei handelt es sich um eine der vorgenannten Ausgangsstoffe, die durch Zugabe beispielsweise von Rahm ("Standardisierung") auf einen definierten Fett- bzw. Eiweißgehalt einstellt. Üblicherweise wird dabei auf ein Fett: Eiweiß-Verhältnis von etwa 0,2 bis etwa 1,5 standardisiert.

An die Standardisierung schließt sich eine Pasteurisierung an. Diese üblicherweise so durchgeführt, dass die Milch eine Verweilzeit von mindestens 10 und höchstens 60 Sekunden, vorzugsweise etwa 30 Sekunden auf eine Temperatur von etwa 70 bis 80 °C und insbesondere etwa 72 bis 74 °C erhitzt.

### Entkeimung

Sowohl die nicht-standardisierte als auch die standardisierte Milch enthalten Keime, insbesondere thermophile Sporen, die unter anderem der menschlichen Gesundheit abträglich sind und entsprechend der einschlägigen gesetzlichen Verordnungen, aber auch zur Qualitätsverbesserung durch geeignete Maßnahmen entfernt werden müssen. Dies geschieht in der Regel durch Filtration oder Baktofugation.

Bei der Baktofugation wird die Milch in einer Zentrifuge ("Baktofuge") in eine keimarme Fraktion und ein Keimkonzentrat ("Baktofugat") aufgetrennt. Das Baktofugat (oder allgemeiner: Keimkonzentrat) stellt jedoch keineswegs ein Abfallprodukt dar, sondern lediglich eine hochgradig keimbelastete Milch. Das Konzentrat wird daher einer Sterilisation bei über 100 °C, typisch 120 bis 140°C unterworfen, wobei alle thermophilen Keime abgetötet werden. Anschließend kann die sterilisierte Phase wieder der keimarmen Phase zugesetzt werden, so dass praktisch keine Milchmenge verloren geht. In Summe wird auf diese Weise eine Milch erzeugt, deren Keimbelastung so gering ist, dass sie gesundheitlich unbedenklich ist und sowohl den gesetzlichen Vorgaben als auch den Qualitätsmaßstäben entspricht. Das auf diese Weise erhaltene Mischprodukt aus keimarmer Milch und sterilisiertem Keimkonzentrat wird im Sinne der vorliegenden Erfindung als Kesselmilch oder Käsemilch bezeichnet.

### Dicklegung und Separation

Die Dicklegung der (standardisierten) Milch erfolgt durch Zugabe von Starterkulturen und/oder Labmaterialien. Geeignet hierfür sind typische Milchsäurekulturen wie beispielsweise *Leuconostoc sp.* oder *Lactococcus sp.,* die dem Fachmann notorisch bekannt sind. Des Weiteren wird der Milch Lab zugefügt, ein natürliches Gemisch der Enzyme Chymosin und Pepsin. Die Mengen liegen jeweils im Bereich von etwa 2 bis 5 g/100L Käsereimilch und vorzugsweise bei etwa 5g /100L Käsereimilch - bezogen auf die Kessel- bzw. Käsemilch. Durch die Starterkulturen und die Enzyme wird der pH-Wert abgesenkt und das Milcheiweiß ausgefällt.

In die Fermentation kann ferner Calciumchlorid eindosiert werden, um auf diese Weise die Gelbildung zu unterstützen. Üblicherweise werden 10 bis 35 Gew.-%ige Lösungen in Mengen von etwa 10 bis etwa 200 g/100 Liter Milch eingesetzt, wobei die bevorzugten Mengen bei etwa 80 bis etwa 120 g/100 Liter liegen.

Die Separation kann ebenfalls in üblicher Weise vorgenommen werden, wobei das für die Herstellung von Schnittkäse typische Abpressen der Molke wenig geeignet ist. Stattdessen eignen sich für diesen Zweck einfache Siebe oder vorzugsweise Drainagebänder, Vorpresswannen oder eine so genannte Casomatik.

### Homogenisierung und Suspensionszusatz

Die bei der Dicklegung anfallende Molke enthält je nach Separationsbedingungen noch unterschiedliche Mengen feine Käsebruchpartikel. Hierbei handelt es sich grundsätzlich um Wertprodukt, das in der Regel mit der minderwertigen Molke verloren geht oder in Separatoren abgeschieden und dann als B-Ware beispielsweise für die Herstellung von Schmelzkäse verwendet wird.

Eine wesentliche Erkenntnis der vorliegenden Erfindung hat indes darin bestanden, dass gerade dieses eher als Ausschuss betrachtete Material die Eigenschaft hat, die thermophysikalischen Eigenschaften von Schnittkäse und Hartkäse entscheidend zu verbessern. Zu diesem Zweck ist es jedoch besonders vorteilhaft, die Partikel zu homogenisieren, da eine einheitliche Partikelverteilung sich besonders günstig auf die Eigenschaften auswirkt. Der Begriff Homogenisierung ist dabei gleichbedeutend mit einer Zerkleinerung der unterschiedlich großen Partikel auf eine einheitliche Größe.

Die Homogenisierung kann im einfachsten Fall direkt in der Molke erfolgen.

In einer ersten alternativen Ausführungsform kann die Molke mit darin erhaltenen feinen Käsebruchpartikeln auch einer Aufarbeitung unterworfen werden, bei der die Molke zunächst ganz oder anteilig entfernt und/oder gegen Wasser oder ein anderes Milchprodukt ausgetauscht oder vermischt wird. Anschließend wird dann das so erhaltene Zwischenprodukt homogenisiert. Hierunter ist insbesondere zu verstehen, die Molke in einem Separator zu entrahmen, die Käsebruchpartikel abzutrennen ("entstauben") und dann durch Dekantieren zu gewinnen.

In einer weiteren Ausführungsform ist es möglich, die Molke mit darin erhaltenen feinen Käsebruchpartikeln einer Aufarbeitung zu unterwerfen, bei der
- die Molke vollständig oder im Wesentlichen abgetrennt wird;
- die resultierenden trockenen oder im Wesentlichen trockenen Käsebruchpartikel in Wasser, einem anderen Milchprodukt oder einem Produkt aus Milch stammend resuspendiert werden, und
- die so erhaltene Suspension einer Homogenisierung unterworfen wird.

Die Homogenisierung bzw. Zerkleinerung der feinen Käsebruchpartikel kann auf verschiedene Arten erfolgen, nämlich mechanisch, thermisch oder (bio)chemisch oder durch eine Kombination zweier Verfahren. Da die Käsebruchpartikel eine Partikelgrößenverteilung aufweisen und die größten Partikel einen Durchmesser von etwa 1 bis 2 mm aufweisen, ist eine Homogenisierung zur Zerkleinerung notwendig.

Die mechanische Zerkleinerung kann mit Hilfe von Mitteln, wie einem Homogenisator, einer Kolloidmühle, einer Kugelmühle, einem High-Shear-Mixer und einer Scheibenmühle erfolgen, aber auch Ultraschalltechniken können eingesetzt werden. Von diesen mechanischen Mitteln wurden mit der Scheibenmühle gute Resultate erzielt. Eine Scheibenmühle ist eine Vorrichtung, in der zwei Aluminiumoxidscheiben in kurzer Entfernung parallel zueinander aufgestellt sind und sich in entgegengesetzter Richtung drehen. Eine Suspension mit darin enthaltenen feinen Käsebruchpartikeln wird kontinuierlich unter Druck zwischen den Scheiben zugeführt, und die feinen Käsebruchpartikel werden von den gegeneinander drehenden Scheiben zerkleinert. Der Abstand der Scheiben hat einen Einfluss auf die letztendlich erhaltene maximale Abmessung der zerkleinerten feinen Käsebruchpartikel.

Besonders bevorzugt ist in diesem Zusammenhang ein thermisches Zerkleinerungsverfahren, nämlich durch Erzeugung von Kavitation, bei dem die Teilchen zur Implosion gebracht werden.

Grundsätzlich kommen auch chemische oder biochemische Verfahren in Betracht, bei denen man die Partikel zunächst auflöst und dann wieder aggregiert. Allerdings ist dies mit erheblichem Aufwand verbunden und daher weniger bevorzugt.

Für den Zweck der Erfindung ist es zweckmäßig, dem Keimkonzentrat oder dessen Sterilisationsprodukt die homogenisierten Käsebruchpartikel in Form einer stabilen Suspension zuzusetzen. Hierunter ist zu verstehen, dass die Partikel stabil in der flüssigen Phase suspendiert vorliegen und nicht sedimentieren. Die Partikel weisen einen Durchmesser von weniger als 250 µm, vorzugsweise weniger als 150 µm auf. Daraus folgt, dass die Teilchen zuvor auf diese Größe homogenisiert bzw. vermahlen worden sind.

Es hat sich ebenfalls als vorteilhaft erwiesen, Suspensionen zuzusetzen, die einen Anteil an festen Käsebruchpartikeln im Bereich von etwa 1 bis etwa 10 Gew.-% aufweisen. Bei höher konzentrierten Suspensionen steigt die Gefahr wieder, dass sich ein Bodensatz bildet.

Die Suspensionen werden erfindungsgemäß nicht der Kessel- oder Käsemilch zugesetzt, sondern entweder dem Keimkonzentrat oder dem sterilisierten Keimkonzentrat. Erstere Alternative ist dabei bevorzugt, weil auf diesem Wege dann auch sichergestellt wird, dass keine Keime eingeführt werden. Zusatzmengen von etwa 0,5 bis etwa 10 Gew.-% und insbesondere etwa 1 bis etwa 5 Gew.-% sind dabei typisch, wobei sich diese Mengenangabe zum einen auf den Käsebruchgehalt in der Suspension und zum anderen auf die behandelte Milch, der das gegebenenfalls sterilisierte Baktofugat zugesetzt wird, beziehen. Geringere Gehalte sind zwar ebenfalls möglich, aber wenig ökonomisch, größere Mengen können indes zu einem verkleben der Strukturen im Schnitt und Hartkäse führen.

### Weiterverarbeitung

Die Weiterverarbeitung des Käsebruchs zum Endprodukt kann in an sich bekannter Weise erfolgen. Dazu gehört, dass die noch anhaftende Molke abgepresst wird Anschließend wird der Käse gegebenenfalls in einer Salzlake gelagert, mit Käsewachs und weiteren Stoffen beschichtet und ist nach einer Reifung von etwa 6 Wochen verzehrfertig.

### BEISPIELE

### Beispiel 1

### Herstellung einer stabilen Käsebruchpartikelsuspension in Molke

100 L Molke aus der Dicklegung von Käsereimilch wurden über ein Drainageband vom Käsebruch abgetrennt und die darin enthaltenen Käsebruchpartikel (Trockenmasse ca. 5 Gew.-%), die eine Größe zwischen 0,01 und 1 mm aufwiesen, in einer Kolloidmühle bis auf eine mittlere Partikelgröße von etwa 150 µm vermahlen.

### Beispiel 2

### Herstellung einer stabilen Käsebruchpartikelsuspension in Magermilch

100 L Molke aus der Dicklegung von Käsereimilch wurden über ein Drainageband vom Käsebruch abgetrennt und die darin enthaltenen Käsebruchpartikel (Trockenmasse ca. 5 Gew.-%), die eine Größe zwischen 0,01 und 1 mm aufwiesen, in einer Kolloidmühle bis auf eine mittlere Partikelgröße von etwa 200 µm vermahlen. Anschließend wurde die Molke ausgewaschen und/oder Magermilch gemischt und die Käsebruchpartikel in Magermilch redispergiert.

### Beispiel 3

### Herstellung einer stabilen Käsebruchpartikelsuspension in Wasser

100 L Molke wurden wie oben beschrieben abgetrennt und in einem Dekanter auf eine Trockenmasse von etwa 20 Gew.-% aufkonzentriert. Die anhaftende Molke wurde ausgewaschen und der Käsestaub anschließend in Wasser redispergiert. Anschließend wurde die Suspension in einer Kolloidmühle bis auf eine mittlere Partikelgröße von etwa 150 µm vermahlen.

### Beispiel 4

### Herstellung von Schnittkäse (erfindungsgemäß)

100 L standardisierte Käsereimilch (Eiweiß-Fett-Verhältnis von 0,2-1,5 1,1) wurden in einer Baktofuge in 95-99,7 L einer verdünnte Magermilchphase und 5 L Baktofugat getrennt. Das Baktofugat wurde mit 2 L der homogenisierten Suspension aus Beispiel 3 versetzt und mit Hilfe eines Ultraturrax homogenisiert, über einen Zeitraum von 20 Sekunden auf 130 °C erhitzt und der verdünnten Magermilchphase wieder zugesetzt. Dem vereinigten Produkt wurden 1 g Starterkultur (Betriebssäurewecker), 5 g Lab sowie 15 g einer 35 Gew.-%igen Calciumchloridlösung zugesetzt. Nach der Dicklegung wurde die die feinen Käsebruchpartikel enthaltene Molke mit Hilfe einer Molkenabsaugung im Fertiger und einer Casomatik vom gallertartigen Rückstand abgetrennt und wie oben beschrieben weiterverarbeitet. Die Zahl thermophiler Keime wurde nach der Zugabe des sterilisierten Baktofugats zur behandelten Milch bestimmt und betrug < 100 KBE/ml.

### Vergleichsbeispiel V1

### Herstellung von Schnittkäse (nicht erfindungsgemäß)

100 L standardisierte Magermilch (Eiweiß-Fett-Verhältnis 0,2-1,5 von 1,1) wurden mit 2 L der Suspension aus Beispiel 3 versetzt und mit Hilfe eines Ultraturrax homogenisiert. Die Mischung wurde anschließend 15 Sekunden bei 72 °C pasteurisiert und mit 1 g Starterkultur (Typ - Betriebssäurewecker), 5 g Lab sowie 125 g einer 35 Gew.-%igen Calciumchloridlösung zugesetzt. Nach der Dicklegung wurde die die feinen Käsebruchpartikel enthaltene Molke mit Hilfe einer Molkenabsaugung im Fertiger und einer Casomatik vom gallertartigen Rückstand abgetrennt und wie oben beschrieben weiterverarbeitet. Die Zahl thermophiler Keime wurde nach der Pasteurisierung bestimmt und betrug >500 KBE/ml.

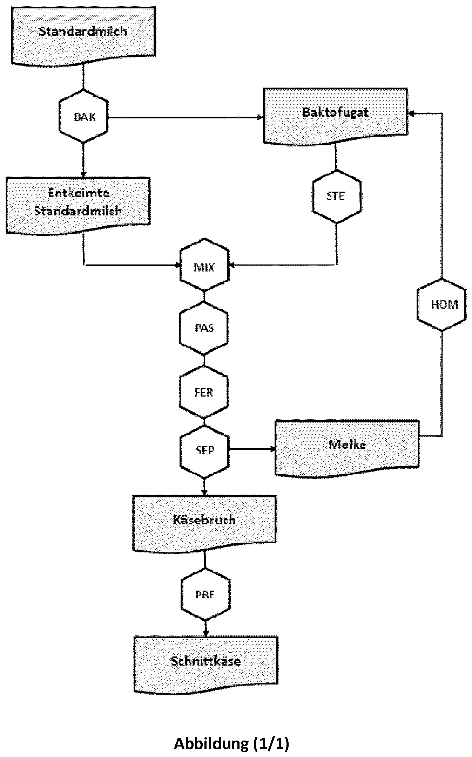

## Patentansprüche

1. Verfahren zur Herstellung von Schnitt- oder Hartkäse, umfassend oder bestehend aus den folgenden Schritten:
(i) Bereitstellung von Milch;
(ii) Dicklegung der Milch unter Zugabe von Starterkulturen und/oder Labmaterialien;
(iii) Trennung der dickgelegten Milch aus Schritt (ii) in Molke und Käsebruch;
(iv) Verarbeitung der in Schritt (iii) erhaltenen Molke mit darin enthaltenen feinen Käsebruchpartikeln zu einer stabilen Suspension, wobei die Käsebruchpartikel einen Durchmesser von weniger als 250 µm aufweisen; sowie
(v) Weiterverarbeitung des in Schritt (iii) erhaltenen Käsebruchs zum Käse,
**dadurch gekennzeichnet, dass**
(a) das Verfahren vor der Trennung von Molke und Käsebruch einen weiteren Schritt enthält, bei dem die Milch einer Filtration und/oder Baktofugation unter Erhalt eines Keimkonzentrats und einer behandelten Milch unterworfen wird;
(b) das in Schritt (a) erhaltene Keimkonzentrat sterilisiert und das sterilisierte Keimkonzentrat der behandelten Milch wieder zugesetzt wird; und
(c) die in Schritt (iv) hergestellte Suspension dem in Schritt (a) erhaltenen Keimkonzentrat zugesetzt wird.

2. Verfahren nach Anspruch 1, **dadurch gekennzeichnet, dass** man Rohmilch, teilentrahmte Milch oder Magermilch einsetzt.

3. Verfahren nach den Ansprüchen 1 und/oder 2, **dadurch gekennzeichnet, dass** man die Milch standardisiert.

4. Verfahren nach Anspruch 3, **dadurch gekennzeichnet, dass** man die Milch auf ein Fett: Eiweiß-Verhältnis von 0,2 bis 1,5 einstellt.

5. Verfahren nach mindestens einem der Ansprüche 3 bis 4, **dadurch gekennzeichnet, dass** man die standardisierte Milch vor oder nach der Filtration und/oder Baktofugation einer Pasteurisierung unterwirft.

6. Verfahren nach mindestens einem der Ansprüche 1 bis 5, **dadurch gekennzeichnet, dass** man die in Schritt (iii) erhaltene Molke mit darin enthaltenen feinen Käsebruchpartikeln einer Homogenisierung unterwirft.

7. Verfahren nach mindestens einem der Ansprüche 1 bis 6, **dadurch gekennzeichnet, dass** man die in Schritt (iii) erhaltene Molke mit darin erhaltenen feinen Käsebruchpartikel einer Aufarbeitung unterwirft, bei der die Molke ganz oder anteilig entfernt und/oder gegen Wasser, ein anderes Milchprodukt oder Produkt aus Milch stammend ausgetauscht oder vermischt wird, und das so erhaltene Zwischenprodukt einer Homogenisierung unterwirft.

8. Verfahren nach mindestens einem der Ansprüche 1 bis 7, **dadurch gekennzeichnet, dass** man die in Schritt (iii) erhaltene Molke mit darin erhaltenen feinen Käsebruchpartikel einer Aufarbeitung unterwirft, bei der
- die Molke vollständig oder im Wesentlichen abgetrennt wird;
- die resultierenden trockenen oder im Wesentlichen trockenen Käsebruchpartikel in Wasser oder einem anderen Milchprodukt resuspendiert werden, und
- die so erhaltene Suspension einer Homogenisierung unterworfen wird.

9. Verfahren nach mindestens einem der Ansprüche 1 bis 8, **dadurch gekennzeichnet, dass** die Homogenisierung mechanisch und/oder thermisch und/oder (bio)chemisch erfolgt.

10. Verfahren nach mindestens einem der Ansprüche 1 bis 9, **dadurch gekennzeichnet, dass** man während der Fermentation Calciumchlorid in einer Menge von 10 bis 200 g/100 Liter Milch zusetzt.

11. Verfahren nach mindestens einem der Ansprüche 1 bis 10, **dadurch gekennzeichnet, dass** Suspensionen zugesetzt werden, die Käsebruchpartikel enthalten, welche einen Durchmesser von weniger als 150 µm aufweisen.

12. Verfahren nach mindestens einem der Ansprüche 1 bis 11, **dadurch gekennzeichnet, dass** Suspensionen zugesetzt werden, die einen Anteil an festen Käsebruchpartikeln im Bereich von 1 bis 10 Gew.-% aufweisen.

13. Verfahren nach mindestens einem der Ansprüche 1 bis 12, **dadurch gekennzeichnet, dass** man den in Schritt (iii) erhaltenen Käsebruch durch Abpressen anhaftender Molkenreste, Formen und Reifen zum Endprodukt verarbeitet.

## Claims

1. A process for the production of semi-hard cheese or hard cheese, comprising or consisting of the following steps:
(i) providing milk;
(ii) coagulating the milk while adding starter cultures and/or rennet material;
(iii) separating the coagulated milk of step (ii) into whey and curd;
(iv) processing the whey obtained in step (iii) with fine curd particles contained therein into a stable suspension, wherein the curd particles have a diameter of less than 250 µm; and
(v) further processing of the curd obtained in step (iii) into cheese,
wherein
(a) before separating the whey and curd, the process comprises a further step of subjecting milk to filtration and/or bactofugation, obtaining a bacterial concentrate and a treated milk;
(b) sterilising the bacterial concentrate obtained in step (a), and re-adding the sterilised bacterial concentrate to the treated milk; and
(c) adding the suspension produced in step (iv) to the bactofugate obtained in step (a).

2. The process according to claim 1, wherein raw milk, semi-skimmed milk or skimmed milk is employed.

3. The process according to claims 1 and/or 2, wherein the milk is standardised.

4. The process of claim 3, wherein the milk is adjusted to a fat-to-protein ratio of 0.2 to 1.5.

5. The process according to at least one of claims 3 to 4, wherein the standardised milk is subjected to filtration and/or bactofugation.

6. The process according to at least one of claims 1 to 5, wherein the whey with fine curd particles contained therein obtained in step (iii) is subjected to homogenisation.

7. The process according to at least one of claims 1 to 6, wherein the whey with fine curd particles contained therein obtained in step (iii) is subjected to conditioning, wherein the whey is wholly or partly removed and/or exchanged for or mixed with water, another dairy product, or a dairy-based product, and the obtained intermediate product is subjected to homogenisation.

8. The process according to at least one of claims 1 to 7, wherein the whey with fine curd particles contained therein obtained in step (iii) is subjected to conditioning, wherein:
- whey is wholly or substantially separated;
- the resulting dry, or substantially dry, curd particles are re-suspended in water or in another dairy product; and
- the suspension such obtained is subjected to homogenisation.

9. The process according to at least one of claims 1 to 8, wherein homogenisation is performed mechanically and/or thermally and/or (bio)chemically.

10. The process according to at least one of claims 1 to 9, wherein calcium chloride is added in an amount of about 10 to about 200 g/100 litres of milk during fermentation.

11. The process according to at least one of claims 1 to 10, wherein the added suspension contains curd particles having a diameter of less than 150 µm.

12. The process according to at least one of claims 1 to 11, wherein the added suspension has a portion in solid curd particles within the range of 1 to 10% by weight.

13. The process according to at least one of claims 1 to 12, wherein the curd obtained in step (iii) is processed into the final product by pressing out adhering whey residues, shaping and maturing.

## Revendications

1. Un procédé de fabrication de fromage à pâte demi-dure ou dure comprenant ou consistant en les étapes suivantes
(i) fournir du lait ;
(ii) la coagulation du lait avec ajout de cultures de départ et/ou de présure ;
(iii) la séparation du lait caillé de l'étape (ii) en lactosérum et en caillé ;
(iv) la transformation du lactosérum obtenu à l'étape (iii) avec les fines particules de caillé de fromage qu'il contient pour former une suspension stable, les particules de caillé de fromage ayant un diamètre inférieur à 250 µm ; et v) la séparation du caillé du lactosérum.
(v) la transformation ultérieure du caillé obtenu à l'étape (iii) en fromage,
**caractérisé en ce que**
(a) le procédé comprend une étape supplémentaire, avant la séparation du lactosérum et du caillé, au cours de laquelle le lait est soumis à une filtration et/ou à une bactofugation pour obtenir un concentré bactérien et un lait traité ;
(b) le concentré de germination obtenu à l'étape (a) est stérilisé et le concentré de germination stérilisé est ajouté de nouveau au lait traité ; et
(c) la suspension préparée à l'étape (iv) est ajoutée au concentré de germes obtenu à l'étape (a).

2. Le procédé selon la revendication 1, **caractérisé en ce que** l'on utilise du lait cru, du lait demi-écrémé ou du lait écrémé.

3. Le procédé selon les revendications 1 et/ou 2, **caractérisé en ce que** le lait est standardisé.

4. Le procédé selon la revendication 3, **caractérisé en ce que** le lait est ajusté à un rapport graisse/protéine de 0,2 à 1,5.

5. Le procédé selon au moins une des revendications 3 à 4, **caractérisé en ce que** le lait normalisé est soumis à une pasteurisation avant ou après filtration et/ou bactofugation.

6. Le procédé selon au moins une des revendications 1 à 5, **caractérisé en ce que** le lactosérum obtenu à l'étape (iii) avec les fines particules de caillé qu'il contient est soumis à une homogénéisation.

7. Le procédé selon au moins une des revendications 1 à 6, qui consiste à soumettre le lactosérum obtenu à l'étape (iii) avec les fines particules de caillé qui y sont obtenues à un traitement dans lequel le lactosérum est totalement ou partiellement éliminé et/ou échangé ou mélangé avec de l'eau, un autre produit laitier ou un produit dérivé du lait, et à soumettre le produit intermédiaire ainsi obtenu à une homogénéisation.

8. Le procédé selon au moins une des revendications 1 à 7, **caractérisé en ce que** le lactosérum obtenu à l'étape (iii) avec les fines particules de caillé qui y sont obtenues est soumis à un traitement dans lequel
- le lactosérum est complètement ou substantiellement séparé ;
- les particules de caillé sec ou sensiblement sec qui en résultent sont remises en suspension dans de l'eau ou un autre produit laitier, et
- la suspension ainsi obtenue est soumise à une homogénéisation.

9. Le procédé selon au moins une des revendications 1 à 8, **caractérisé en ce que** l'homogénéisation est effectuée mécaniquement et/ou thermiquement et/ou (bio)chimiquement.

10. Le procédé selon au moins une des revendications 1 à 9, **caractérisé en ce que** du chlorure de calcium est ajouté pendant la fermentation en une quantité de 10 à 200 g/100 litres de lait.

11. Le procédé selon au moins une des revendications 1 à 10, **caractérisé en ce que** l'on ajoute des suspensions contenant des particules de caillé ayant un diamètre inférieur à 150 µm.

12. Le procédé selon au moins une des revendications 1 à 11, **caractérisé en ce que** l'on ajoute des suspensions qui contiennent une proportion de particules solides de caillé comprise entre 1 et 10 % en poids.

13. Le procédé selon au moins une des revendications 1 à 12, **caractérisé en ce que** le caillé obtenu à l'étape (iii) est transformé en produit final par pressage des résidus de lactosérum adhérents, des moisissures et de la maturation.
